# EUROPEAN PATENT SPECIFICATION

(11) **EP 0 895 498 B1**
(45) Date of publication and mention of the grant of the patent: **08.08.2001**
(21) Application number: 98905927.4
(22) Date of filing: 23.02.1998
(51) Int. Cl.: B60P 1/64

(54) **ARRANGEMENT AT HEAVY VEHICLES**
VORRICHTUNG AUF SCHWERLASTWAGEN
DISPOSITIF SUR VEHICULES POIDS LOURDS

(30) Priority: 21.02.1997 SE 9700656
(43) Date of publication of application: 10.02.1999
(73) Proprietor: Joab Jan Olsson AB, 417 29 Göteborg (SE)
(72) Inventor: STRÖM, Ove, S-447 30 Vargarda (SE)
(74) Representative: Bergentall, Annika Maria
(86) International application number: SE9800311
(87) International publication number: WO9836937

(56) References cited:
- DE-A- 2 628 060

## Description

### TECHNICAL FIELD:

The present invention relates to an arrangement for trucks according to the preamble of the following claim 1. The invention has its main application in the field of heavy trucks that are provided with cargo changers. An example of such a vehicle Ø is previously known from DE 2628060A1.

### STATE OF THE ART:

In the field of trucks, there is often a desire to be able to easily and efficiently change the cargo that the vehicle shall carry. These demands are especially based upon the need for flexibility of the vehicle, so that one and the same pull vehicle may be used for different types of cargo, e.g. a container or a tippable platform body.

The above desire may be satisfied with the aid of a cargo changer, which in itself is a prior art design that comprises a cargo carrier which carries the actual cargo and which is mounted upon the chassis of the pull vehicle. The load carrier normally consists of a girder construction comprising two longitudinal beams, e.g. U-beams and three or four transverse beams connecting the longitudinal beams. The actual load is then arranged on the top of the cargo carrier.

The load carrier is designed to lift and handle a cargo of a certain standard concept. Normally, the cargo in itself (e.g. a container or a platform) is mounted upon a so called roll platform frame, which in its turn is intended to be lifted onto the pull vehicle. For this object, the cargo changer normally comprises an arrangement with a pivotally arranged lift arm which is provided with a hook, as well as a hydraulic cylinder unit by means of which the lift arm may be operated. When the roll platform frame with its appurtenant cargo shall be placed upon the pull vehicle, the hook is attached to the roll platform frame, whereupon the power cylinder is activated so that the lift arm pulls up the roll platform frame onto the pull vehicle. The cargo changers of today are normally arranged so that they on one hand may be used for marshaling a cargo, i.e. pull the load onto the pull vehicle and then move it back to the ground, and on the other for tipping cargo. The later alternative is of course relevant when the cargo changer carries a cargo in the form of a tippable platform.

In connection with load vehicles, there is also a general desire to provide such a large available cargo space as possible. In particular it is to the utmost that the height of the vehicle may be used to the optimum. This is based upon the regulations which in most countries define the maximum allowable height of a cargo vehicle. Normally the maximum allowable total height of a cargo vehicle is 4 meters. This implies that it must be arranged so that each component of the vehicle having vertical extension is as low as possible.

The limitations with regard to the height of the cargo vehicle composes a problem in the field of cargo changers, as they are mounted upon the chassis of the vehicle and therefore also contribute to height of the vehicle. In order to solve this problem, so that as little cargo space as possible is taken up by the cargo changer, are the load carrying beams of the cargo changer made as low as possible. Normally, the above mentioned power cylinder is also arranged so that it is folded down towards the cargo changer in connection with pulling the cargo up onto the pull vehicle, more precisely so that the power cylinder is folded down below the roll platform frame when it is not used (i.e. when the load is in place upon the cargo vehicle) . In this inactive condition, the power cylinder is in a position where it exhibits an angle towards the chassis which only amounts to a few degrees, i.e. the power cylinder is arranged so that it has a longitudinal extension which is almost in parallel with the chassis. As an example may be mentioned that prior art cargo changers normally are designed so that the power cylinder in the initial position exhibits an angle which amounts to about 6-7°.

However, this arrangement of the power cylinder leads to a problem because only a small lifting power is then available for operating the lift arm. Naturally, this is caused by that only an insignificant lever arm is available when the power cylinder is arranged almost in parallel with the chassis of the vehicle during start of the lifting phase.

If the angle is only a few degrees, a very high load must be applied by means of the power cylinder in order for it to be able to lift the lift arm and the cargo. Because a normal load may weigh about 20 metric tons, it will be realized that this arrangement with the power cylinder amounts to a problem.

In order to solve this problem, it is previously known to use auxiliary cylinders that are activated when a load shall be lifted by the vehicle or be tipped. For this, these auxiliary cylinders are used for pressing against the lift arm the first distance before the actual power cylinder is activated. When the angle between the power cylinder and the chassis has become sufficient, in the range of 5-10°, a sufficiently large lever arm is present for the power cylinder to be able to lift the cargo by itself.

A drawback with prior art systems including auxiliary cylinders is however that they have a certain extension vertically which limits the available cargo space of the vehicle.

### SUMMARY OF THE INVENTION:

The object of the present invention is to provide an improved arrangement in connection with cargo changers for cargo vehicles, which enables a low mounting dimension in the vehicle and which has a high lifting power and an efficient function.

This object is achieved by means of an apparatus which is characterized in accordance with the accompanying claim 1.

The invention is intended for cargo vehicles with a cargo changer which in its turn includes a cargo carrier, a pivotally arranged lift arm, a power unit extending from an axis of rotation in said cargo carrier to another axis of rotation in said lift arm and at least one auxiliary unit for power supply when activating said lift arm. The invention is based upon that said auxiliary unit is connected to means for direct action onto a cargo arranged upon the cargo carrier, whereby said cargo is lifted to a position where the power from the power unit is sufficient for pivoting the lift arm. By those means, the cargo may be elevated up to a position where the power unit may take over and act upon the lift arm. Because the auxiliary cylinder acts directly upon the cargo (which preferably comprises a roll platform frame), an efficient lifting of the cargo is caused until the power unit may take over by itself and complete lifting.

Advantageous embodiments of the invention are described in the subsequent depending claims.

### DESCRIPTION OF THE DRAWINGS:

The invention will in the following be further described under reference to the accompanying drawings in which:
- Fig. 1: is a side view of a cargo vehicle which is provided with a cargo changer, mainly in accordance with prior art,
- Fig. 2: is a side view showing the cargo vehicle in accordance with Fig. 1, wherein a cargo is positioned on top of the vehicle,
- Fig. 3: is a somewhat enlarged side view showing an arrangement in accordance with the present invention, and
- Fig. 4: is a view from above of the arrangement according to Fig. 3.

### DETAILED DESCRIPTION OF THE INVENTION

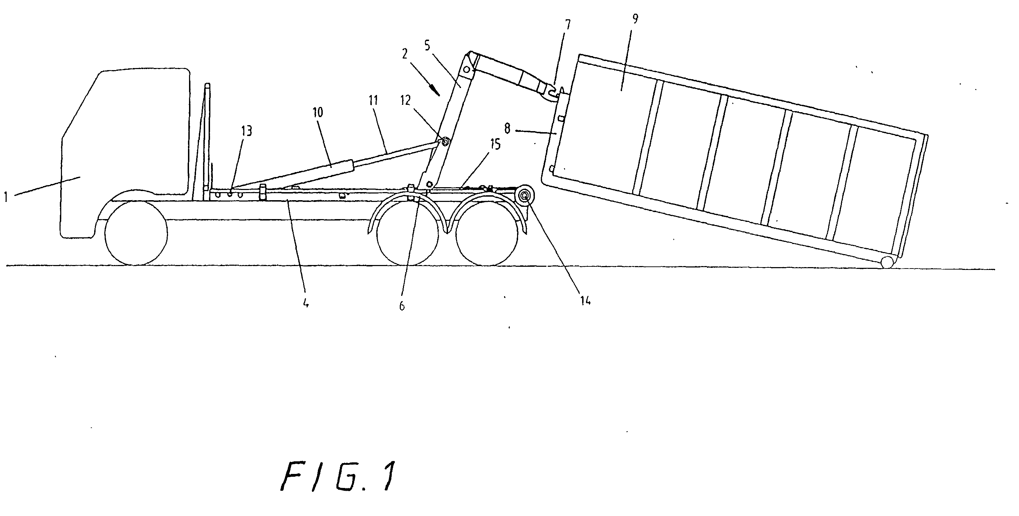

The invention is in particular, but not exclusively, intended for cargo vehicles of the type which is intended to be used together with a cargo changer. Figure 1 is a somewhat simplified side view which in accordance with prior art shows the basic principle of a cargo vehicle 1 which is provided with a cargo changer 2. This cargo changer 2 is arranged on top of the chassis 3 of the vehicle 1, contributing to a reduction of the available height of the vehicle 1 in comparison with the case where no cargo changer 2 is used on the vehicle 1. The cargo changer 2 comprises a cargo carrier in the form of a beam structure 4 with two longitudinal beams, wherein only one beam is shown in the figure as well as transverse beam elements (not shown) connecting said beams. The cargo changer 2 also comprises a lift frame 5 which is pivotally mounted around an axis 6 of rotation included in the beam structure 4. The lift arm 5 is designed with a hook 7 which is intended to be attached in a suitable manner in a roll platform frame 8. According to what was mentioned initially, the roll platform frame 8 is a structure with standard measurements which is intended for carrying the actual load 9. According to the figure, the cargo 9 consists of a container but other types of cargo are also imaginable, e.g. a tippable cargo platform.

The lift arm 5 may be influenced to pivot around its axis 6 of rotation, by means of two power cylinders 10 of which only one power cylinder is shown in the figure. The power cylinders are preferably of hydraulic type. Furthermore, the respective power cylinder 10 comprises a telescoping piston rod 11 which is pivotally mounted in an axis of rotation 12 in the lift arm 5. The other end of the power cylinder 10 is pivotally mounted in another axis of rotation 13 which is located in the beam structure 4.

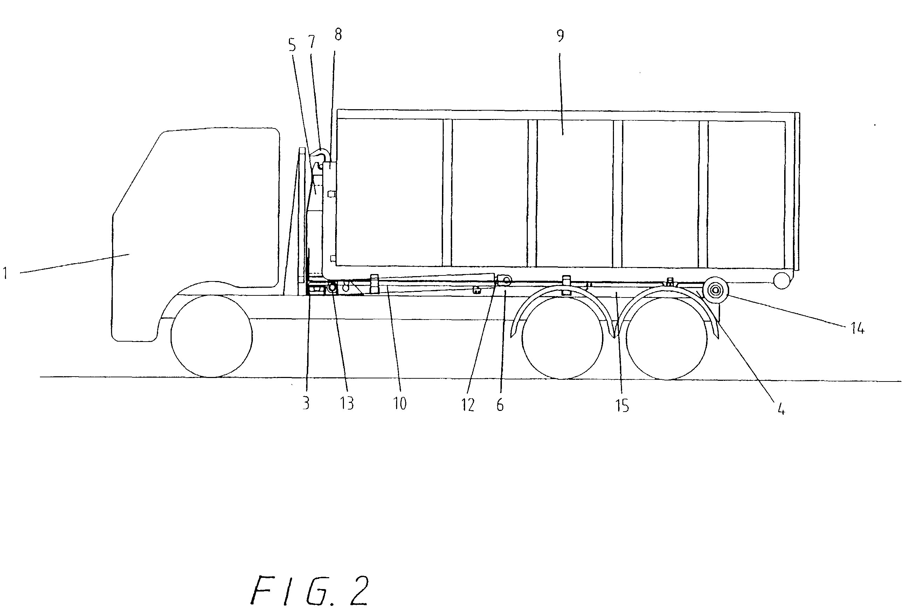

When the roll platform 8 with attached load 9 shall be moved up on top of the cargo vehicle 1, the hook 7 is first fastened to a shackle in the roll platform frame 8. Then the lift arm is pivoted until the bottom edge of the roll platform frame 8 has been lifted so high that it abuts a roller 14 at the rear part of the cargo changer 2. This condition corresponds with what is shown in Fig. 1. After that the lift arm 5 continues its movement until the roll platform frame 8 is positioned on top of the cargo vehicle 1 in the position which is shown in Fig. 2.

From Fig. 2, which in principle also shows previously known technique, it appears that the power cylinder 10 ends up in a position below the roll platform frame 8 when the cargo changer 2 has taken the position in which the load 9 is in place. In order not to intrude unnecessary much upon the vertical space, the power cylinder 10 is so arranged in this rest position that it exhibits an angle with reference to the longitudinal direction of the chassis 3 which is only a few degrees. Still is arranged so that the axis 12 of rotation which is arranged in the lift arm 5, is positioned somewhat higher up than the axis 13 of rotation which composes the attachment of the power cylinder 10 in the beam structure 3.

It appears from Fig. 1 and 2 that loading the cargo 9 on or off may take place by pivoting the lift arm 5 around the axis 6 of rotation. If the cargo 9 instead is made up of a tippable platform and if this platform shall be tipped, the rear part 15 of the cargo changer is first locked together with the lift arm 5. When activating the power cylinder 10, the lift arm 5 will then not pivot around the axis of rotation 6, but the power cylinder 10 will then influence the lift arm 5 together with said rear part 15 (which in this moment thus are not locked together) and pivot these around the shaft which is defined by the roller 14. At full stroke of the power cylinder 10, the load reaches an angle of pitch which may amount to about 50° with reference to the horizontal plane.

Thus, it appears from Fig. 2 that when the roll platform frame 8 shall be lifted off from the vehicle 1, the power cylinder 10 must be activated so that it may actuate the lift arm 5 to pivot up, so that the roll platform frame 8 in its turn may be lifted up and roll over the roller 14 and down upon the ground. A corresponding activation of the power cylinder 10 also occurs at a prospective tipping of a cargo. It is understood that a very large force is required from the power cylinder 10 in order for it to be able'to lift the roll platform frame 8, because the lever arm between the axis 12 of rotation of the power cylinder and the axis 6 of rotation of the lift arm 6 are almost nonexistent. It is thus a primary object of the present invention to solve this problem so that an efficient use of the power may be obtained from the power cylinder 10.

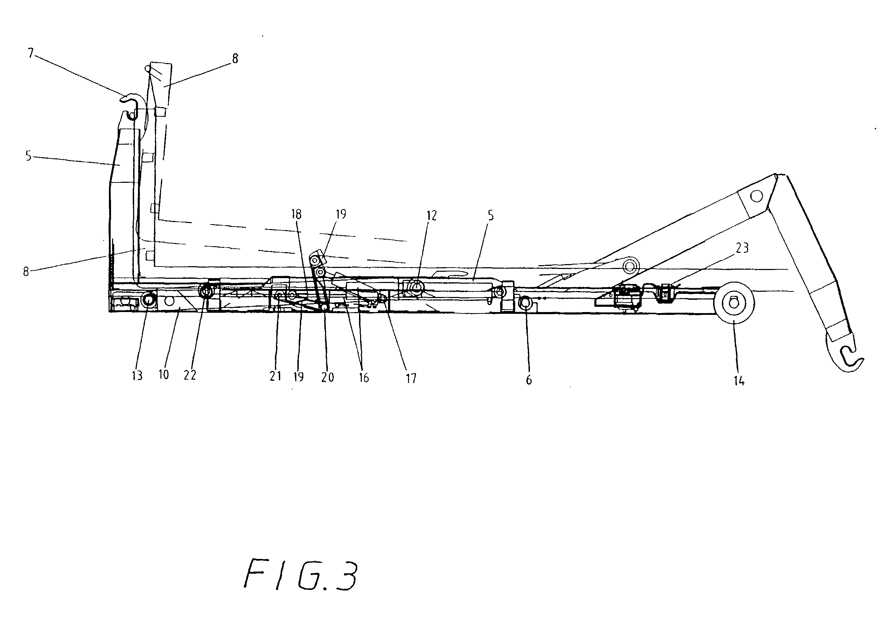

Figure 3 is a somewhat enlarged side view corresponding to what is shown in figure 2, but also including an arrangement according to the present invention. In order to solve the above problem, the beam structure 4 carries two auxiliary cylinders 16 (of which only one auxiliary cylinder appears in figure 3). The respective auxiliary cylinder 16 is preferably of a hydraulic type and is pivotally arranged in an axis of rotation 17, and including a telescoping piston rod 18 the end part of which is pivotally attached to a link element 19. It is understood here that figure 3 shows the auxiliary cylinder and the link element i two different modes of operation.

The link element 19 is pivotally mounted in a further axis 20 of rotation which is arranged in the beam structure 4. In this way, the link element 19 may pivot from one position with substantially horizontal extension, to a position with substantially vertical extension. The free end of the link element 19 carries a roller 21.

When the roll platform 8 is in place on top of the cargo vehicle 1 and shall be lifted off the vehicle 1 (or alternatively be tipped) together with the actual cargo, the power cylinder 10 will only be able to operate with a comparatively small force in order to swing up the lift arm 5. For this reason, the respective auxiliary cylinder 16 is first activated when the roll platform frame shall be lifted. During this activation, which takes place in a hydraulic manner, the piston is gradually pulled into the auxiliary cylinder 16 making the appurtenant link element 19 swing in the direction toward its vertical position (i.e. clockwise in accordance with what is shown with an arrow in figure 3). This causes that the roller 21 will come into contact with the roll platform frame 8 and actuate it to lift a distance. Finally, the link element 19 will reach its position with substantially vertical longitudinal extension which is indicated with the reference number 19' in figure 3.

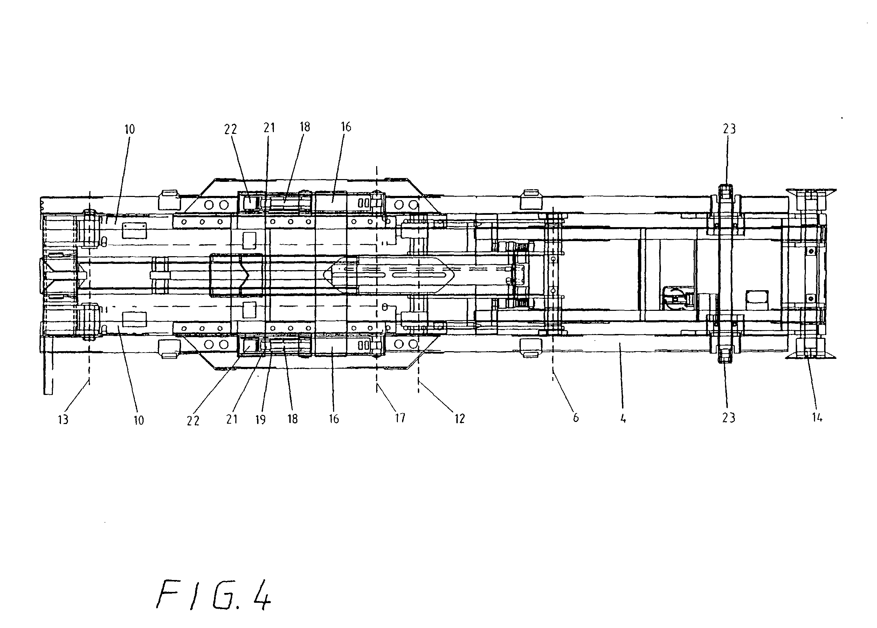

Figure 4 is a view from above of the arrangement in accordance with the invention and corresponding in principle with what is shown in figure 3. When the link element 19 finally has reached its vertical position (19'), the roll platform frame 8 correspondingly has been lifted a certain distance to reach the position which is shown with dotted lines and with the reference number 8' in figure 3. In this position, the respective power cylinder 10 has also been lifted so high that it forms a comparatively large angle with reference to the chassis of the vehicle. This makes it possible for the power cylinder 10 to lift the lift arm 5 so that the roll platform frame 8 and the load in its turn may be lifted by the vehicle. For the arrangement in accordance with the invention, the initial angle of the power cylinder 10 preferably is in the order of 2-3°. When the power cylinders 10 takes over after lifting by means of the auxiliary cylinders 16, this angle is about 8-9°.

When the roll platform frame 8 (not shown in figure 4) together with its cargo is in place on the cargo shifter, it rests upon two rollers 22 as well as the above mentioned rear rollers 14. It is also secured during transport by means of hooks 23 which are brought to engage into the roll platform frame 8, as well as that the lift shackle of the roll platform frame is locked in the lift hook 7.

Preferably the power cylinders 10 and the auxiliary cylinders 16 are part of the same hydraulic system and are connected in parallel to each other. By this, the auxiliary cylinders 16 may be activated first and the power cylinders 10 subsequently. More exactly, the auxiliary cylinders 16 are designed so that they initially has a more advantageous lever arm and a smaller piston area than the power cylinders 10.

The auxiliary cylinders 16 are arranged so that they have an almost horizontal longitudinal extension in its rest position, i.e. when the cargo is mounted on the vehicle. This leads to that the dimensions of the auxiliary cylinders 16 do not noticeably contribute to an increase of the height of the vehicle. Also the auxiliary cylinders 16 are preferably dimensioned so that they alone may lift the current cargo during their cycle of operation.

According to what is disclosed in figure 4, the auxiliary cylinders 16 are positioned as far out as possible along the sides of the beam structure 4. This allows for that the respective roller 21 may be arranged so that it acts directly against the bottom side of the roll platform frame 8. Because the rollers 21 press against the roll platform frame 8 and not against the actual cargo changer, an efficient use of the power from the power cylinders 10 is achieved.

The positioning of the auxiliary cylinders 16 far away out at the sides of the cargo changer is also advantageous in view of space-saving, because there is comparatively little space available inside the cargo changer.

The invention is not limited to the above described and in the drawings shown embodiments, but may be varied within the frame of the accompanying claims. For example, the invention may be used both for moving as well as for tipping cargo.

## Claims

1. Arrangement for trucks (1) with a cargo changer (2) including a cargo carrier (4) which is arranged on the truck (1), a pivotally arranged lift arm (5), a power unit (10) extending from an axis of rotation (13) in said cargo carrier (4) to another axis of rotation (12) in said lift arm (5), and at least one auxiliary unit (16) for power supply when activating said lift arm (5),
**characterized** in that said auxiliary unit (16) is connected to means (19, 21) for direct action onto a cargo (8, 9) arranged upon the cargo carrier (4), whereby said cargo (8, 9) is lifted to a position where the power from the power unit (10) is sufficient for pivoting the lift arm (5).

2. Arrangement according to claim 1,
**characterized** in that it includes two auxiliary units (16) which are located substantially farthest out at the outer parts of the respective sides of the load carrier (4).

3. Arrangement according to claim 1 or 2,
**characterized** in that the aforementioned cargo carrier (4) is made up of a beam structure comprising at least two beams extending substantially in the longitudinal direction of the truck (1).

4. Arrangement according to claim 1,
**characterized** in that the aforementioned cargo (8, 9) comprises a roll platform frame (8;8') and that said auxiliary unit (16) is arranged to operate directly against said roll platform frame (8;8') when lifting it.

5. Arrangement according to anyone of the preceding claims,
**characterized** in that said means (19, 21) comprise a link element (19) which is pivotally mounted in said cargo carrier (4) and carrying a roller (21) for contact with the cargo (8, 9) and which also is connected to said auxiliary unit (16).

6. Arrangement according to any of the preceding claims,
**characterized** in that the power unit (10) and the auxiliary unit (16) consists of hydraulic cylinder units.

## Patentansprüche

1. Anordnung für Lastkraftwagen (1) mit einer Ladungswechselvorrichtung (2), umfassend einen Ladungsträger (4), der auf dem Lastkraftwagen (1) angeordnet ist, einen verschwenkbar angeordneten Hubarm (5), ein Antriebsaggregat (10), das sich von einer Drehachse (13) in dem Ladungsträger (4) aus zu einer anderen Drehachse (12) in dem Hubarm (5) erstreckt, und mindestens ein Hilfsaggregat (16) zur Kraftzufuhr, wenn der Hubarm (5) aktiviert ist,
dadurch **gekennzeichnet**, daß das Hilfsaggregat (16) mit Mitteln (19, 21) zur direkten Wirkung auf eine auf dem Ladungsträger (4) angeordnete Ladung (8, 9) verbunden ist, wodurch die Ladung (8, 9) in eine Position angehoben wird, in der die Kraft von dem Antriebsaggregat (10) ausreicht, um den Hubarm (5) anzuheben.

2. Anordnung nach Anspruch 1,
dadurch **gekennzeichnet**, daß sie zwei Hilfsaggregate (16) umfaßt, die im wesentlichen am weitesten außen an den äußeren Teilen der jeweiligen Seiten des Lastträgers (4) angeordnet sind.

3. Anordnung nach Anspruch 1 oder 2,
dadurch **gekennzeichnet**, daß der vorstehend genannte Ladungsträger (4) aus einem Balkentragwerk besteht, das mindestens zwei Balken umfaßt, die sich im wesentlichen in der Längsrichtung des Lastkraftwagens (1) erstrecken.

4. Anordnung nach Anspruch 1,
dadurch **gekennzeichnet,** daß die vorstehend genannte Ladung (8, 9) einen Rollplattformrahmen (8; 8') umfaßt, und daß das Hilfsaggregat (16) derart angeordnet ist, daß es direkt gegen den Rollplattformrahmen (8; 8') wirkt, wenn es diesen anhebt.

5. Anordnung nach einem der vorhergehenden Ansprüche,
dadurch **gekennzeichnet**, daß die Mittel (19, 21) ein Gelenkelement (19) umfassen, das in dem Ladungsträger (4) verschwenkbar angebracht ist und eine Walze (21) zum Kontakt mit der Ladung (8, 9) trägt und das auch mit dem Hilfsaggregat (16) verbunden ist.

6. Anordnung nach einem der vorhergehenden Ansprüche,
dadurch **gekennzeichnet**, daß das Antriebsaggregat (10) und das Hilfsaggregat (16) aus Hydraulikzylindereinheiten bestehen.

## Revendications

1. Agencement destiné à des camions (1) comprenant un dispositif de changement de chargement (2) incluant un porte-charge (4) qui est disposé sur le camion (1), un bras de levage disposé avec possibilité de pivotement (5), une unité motrice (10) s'étendant depuis un axe de rotation (13) dans ledit porte-charge (4) vers un autre axe de rotation (12) dans ledit bras de levage (5), et au moins une unité auxiliaire (16) destinée à fournir de la puissance lors de l'actionnement dudit bras de levage (5),
caractérisé en ce que ladite unité auxiliaire (16) est reliée à un moyen (19, 21) destiné à diriger l'action sur un chargement (8, 9) disposé sur le porte-charge (4), d'où il résulte que ledit chargement (8, 9) est soulevé jusqu'à une position où la puissance provenant de l'unité motrice (10) est suffisante pour faire pivoter le bras de levage (5).

2. Agencement selon la revendication 1,
**caractérisé** en ce qu'il comprend deux unités auxiliaires (16) qui sont situées pratiquement le plus loin à l'extérieur au niveau des parties extérieures des côtés respectifs du porte-charge (4).

3. Agencement selon la revendication 1 ou 2,
**caractérisé** en ce que le porte-charge (4) mentionné précédemment est constitué d'une structure en poutrelles comprenant au moins deux poutrelles s'étendant pratiquement dans la direction longitudinale du camion (1).

4. Agencement selon la revendication 1,
**caractérisé** en ce que le chargement mentionné précédemment (8, 9) comprend un cadre de plate-forme roulante (8, 8') et en ce que ladite unité auxiliaire (16) est agencée pour agir directement contre ledit cadre de plate-forme roulante (8, 8') lors de son soulèvement.

5. Agencement selon l'une quelconque des revendications précédentes,
**caractérisé** en ce que ledit moyen (19, 21) comprend un élément articulé (19) qui est monté avec possibilité de pivotement dans ledit porte-charge (4) et portant un galet (21) destiné à un contact avec le chargement (8, 9) et qui est également relié à ladite unité auxiliaire (16).

6. Agencement selon l'une quelconque des revendications précédentes,
**caractérisé** en ce que l'unité motrice (10) et l'unité auxiliaire (16) sont constituées d'ensembles de vérins hydrauliques.
